# EUROPEAN PATENT APPLICATION

(11) **EP 2 548 801 A1**
(43) Date of publication of application: **23.01.2013**
(21) Application number: 11175052.7
(22) Date of filing: 22.07.2011
(51) Int. Cl.: B64C 23/06, F03D 1/06, F03D 7/02, F03D 11/00

(54) **Wind turbine blade comprising vortex generators**

(71) Applicant: LM Wind Power A/S, 6000 Kolding (DK)
(72) Inventor: Madsen, Jesper, DK-6621 Gesten (DK)
(74) Representative: Kitchen, Steven Richard

(57) **Abstract**

Disclosed is a wind turbine blade and a method for retrofitting a wind turbine blade, the wind turbine blade extending in a longitudinal direction along a pitch axis and having a tip end and a root end as well as a blade length, the wind turbine blade further comprising a profiled contour including a pressure side and a suction side, as well as a leading edge and a trailing edge with a chord having a chord length extending there between, the profiled contour, when being impacted by an incident airflow generating a lift, wherein the suction side of the wind turbine blade is provided with a plurality of vortex generators positioned along a mounting line having a proximal end point nearest the root end and a distal end point nearest the tip end, wherein the mounting line is a concave line seen from the trailing edge of the wind turbine blade.

## Description

The present invention relates to a wind turbine blade comprising vortex generators, in particular a wind turbine blade comprising vortex generators arranged on the suction side surface of the wind turbine blade.

### BACKGROUND

Wind turbine manufacturers are constantly making efforts to improve the efficiency of their wind turbines in order to maximise the annual energy production. Further, the wind turbine manufacturers are interested in prolonging the lifetime of their wind turbine models, since it takes a long time and a lot of resources to develop a new wind turbine model. An obvious way to improve the efficiency of the wind turbine, is to improve the efficiency of the wind turbine blades, so that the wind turbine can generate a higher power output at a given wind speed.

Accordingly, there is a need for ways to improve the efficiency of new and/or existing blades.

### SUMMARY

Accordingly, it is an object of the present invention to provide a wind turbine blade with improved aerodynamic properties enabling higher energy yield.

A wind turbine blade for a rotor of a wind turbine having a substantially horizontal rotor axis, the rotor comprising a hub from which the wind turbine blade extends substantially in a radial direction when mounted to the hub is provided, the wind turbine blade extending in a longitudinal direction along a pitch axis and having a tip end and a root end as well as a blade length, the wind turbine blade further comprising a profiled contour including a pressure side and a suction side, as well as a leading edge and a trailing edge with a chord having a chord length extending there between, the profiled contour, when being impacted by an incident airflow generating a lift, wherein the suction side of the wind turbine blade is provided with a plurality of vortex generators positioned along a mounting line having a proximal end point nearest the root end and a distal end point nearest the tip end. The mounting line may be a concave line seen from the trailing edge of the wind turbine blade.

Further, a method for retrofitting a wind turbine blade extending in a longitudinal direction along a pitch axis and having a tip end and a root end as well as a blade length, the wind turbine blade further comprising a profiled contour including a pressure side and a suction side, as well as a leading edge and a trailing edge with a chord having a chord length extending there between, the profiled contour, when being impacted by an incident airflow generating a lift is provided, the method comprising mounting a plurality of vortex generators along a mounting line having a proximal end point nearest the root end and a distal end point nearest the tip end. The mounting line may be a concave line seen from the trailing edge of the wind turbine blade. The method may comprise mounting vortex generators to provide a wind turbine as described herein

The wind turbine blade according to the present invention provides improved flow on a wind turbine blade with improved aerodynamic properties thereby enabling a higher energy yield from the wind turbine with the respective wind turbine blade. In particular, a wind turbine blade with improved aerodynamic properties in the transition region and a first part of the airfoil region of the blade is provided.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
- Fig. 1: shows a wind turbine,
- Fig. 2: shows a schematic view of a wind turbine blade with vortex generators according to the invention,
- Fig. 3: shows a schematic view of an airfoil profile,
- Fig. 4: shows a schematic view of a wind turbine blade seen from above and from the side,
- Fig. 5: illustrates an exemplary cross section of a wind turbine blade at the proximal end point,
- Fig. 6: schematically illustrates vortex generators mounted on the suction side of a wind turbine blade,
- Fig. 7: is a perspective view of a vortex generator,
- Fig. 8: illustrates a part of an exemplary wind turbine blade according to the invention, and
- Fig. 9: illustrates a part of an exemplary wind turbine blade according to the invention.

### DETAILED DESCRIPTION

The figures are schematic and simplified for clarity, and they merely show details which are essential to the understanding of the invention, while other details have been left out. Throughout, the same reference numerals are used for identical or corresponding parts.

The wind turbine blade according to the present invention allows for a vortex generator configuration, where the vortex generators are arranged close to the area of possible or expected flow separation on the suction side of a corresponding wind turbine blade without the vortex generators, the flow separation being caused by the aerodynamic profile of the root region and the transition region. Accordingly, the wind turbine blade provides an improved separation profile by moving the separation towards the trailing edge or even preventing separation on the suction side of the wind turbine blade. At the same time, the induced drag from the vortex generators protruding from the suction side surface is minimized.

The chord-wise distance between the vortex generators and the expected separation line for a wind turbine blade without vortex generators cannot be too small, since the position of the separation line changes during different operating conditions. On the other hand, the chord-wise distance from the expected separation line cannot be too large, since the effect of the vortex generators is reduced with increased distance. It is desired that the vortex generators are positioned between the expected separation line and the leading edge in order to obtain the optimum effect. Further, it may be desired to arrange the vortex generators as far from the leading edge or as close to the trailing edge as possible in order to reduce or eliminate drag effects. The vortex generators are typically arranged between the expected separation line and the leading edge of the wind turbine blade.

It is recognised that the surface of the wind turbine blade itself curves. Therefore, a concave mounting line is to be understood as a line, which when projected into a chordal plane of the blade is concave, or equivalently that the mounting line may be concave from the trailing edge in a top view of the suction side of the blade. It is also understood that the plurality of vortex generators comprises a proximal vortex generator located at the proximal end point and a distal vortex generator located at the distal end point as well as at least one intermediate vortex generator between the proximal vortex generator and the distal vortex generator. Intermediate vortex generator(s) may be located at intermediate point(s) on the mounting line. In an embodiment, line segments of the mounting line, i.e. a part of the mounting line may be concave.

A vortex generator may comprise a base with a centre position and one or a pair of vanes including a first vane and optionally a second vane protruding from the base. Centre positions of vortex generators may define end points and intermediate points of the mounting line.

The plurality of vortex generators may comprise one or more sets of vortex generators, e.g. a first set of vortex generators positioned along a first line segment of the mounting line and/or a second set of vortex generators positioned along a second line segment of the mounting line. The plurality of vortex generators or set(s) of vortex generators, such as a first set of vortex generators positioned along a first line segment and/or a second set of vortex generators positioned along a second line segment, may comprise at least 10, at least 20, at least 30, at least 40 or at least 50 vortex generators.

The mounting line may follow the centre position of the vortex generators or alternatively the leading edge of the vortex generators. The mounting line or line segment(s) thereof may follow or substantially coincide with a line defining the shortest path between two points, e.g. between two intermediate points or between an end point and an intermediate point of the mounting line, along the suction side surface of the wind turbine blade.

The mounting line may extend along a part of the blade length. The mounting line may extend along 10% to 50% of the blade length, such as along 15% to 40%. In one or more embodiments, the mounting line extends along 20% to 35% of the blade length.

The mounting line may form a smooth concave curve. However, in practice it can be cumbersome to arrange the vortex generators along a smooth concave curve, in particular since the vortex generators are often mounted on or via strips. Therefore, according to a particular advantageous embodiment, the concave mounting line is divided into two or more straight line segments.

The profiled contour of the wind turbine blade may be divided into a root region having a substantially circular or elliptical profile closest to the hub, an airfoil region having a lift-generating profile furthest away from the hub, and a transition region between the root region and the airfoil region, the transition region having a profile gradually changing in the radial direction from the circular or elliptical profile of the root region to the lift-generating profile of the airfoil region. The profiled contour may have a shoulder with a shoulder width and located at the boundary between the transition region and the airfoil region. The shoulder may be located in an interval of 0.15L to 0.25L, or 0.18L to 0.25L, or 0.19L to 0.24L from the root end, where L is the length of the wind turbine blade. The mounting line may extend along substantially the entire transition region of the blade.

The proximal end point of the mounting line may be located close to the root end, e.g. in a blade length interval of 0 - 0.12L from the root end. In one or more embodiments, the proximal end point is located in a blade length interval of 0 - 0.10L, such as 0 - 0.08L or 0 - 0.6L from the root end.

The proximal end point may be located at a chord-wise distance from the leading edge. The proximal end point may be located in a relative chordal position of 2%-20% from the leading edge. In one or more embodiments, the proximal end point is located in a relative chordal position of 3%-15%, or 5-15%, e.g. approx 10% from the leading edge.

The distal end point may be located in the transition region or in the airfoil region. The distal end point of the mounting line may be located in a blade length interval of 0.2L to 0.5L from the root end. In one or more embodiments, the distal end point is located in a blade length interval of 0.25L to 0.45L, such as from 0.3L to 0.4L, from the root end.

The distal end point may be located at a chord-wise distance from the leading edge. The distal end point of the mounting line may be located in a relative chordal position of 20%-80% from the leading edge. In one or more embodiments, the distal end point is located in a relative chordal position of 25%-70%, or 30-60%, e.g. approx 50% from the leading edge.

A tangent to the proximal end point of the mounting line may form an angle with the pitch axis, e.g. in the range from 0 to 10 degrees, or from 0 to 5 degrees.

A tangent to the distal end point of the mounting line may form an angle with the pitch axis in the range from 5 degrees to 45 degrees or 5 degrees to 35 degrees, such as 8 degrees.

The difference in tangent angles and/or chord-wise distance from the leading edge, provides a wind turbine blade showing improved aerodynamic properties, in particular near or at the shoulder and transition region.

The mounting line may comprise at least one intermediate point including a first intermediate point, wherein the at least one intermediate point divides the mounting line into a plurality of line segments including a first line segment and a second line segment. The first line segment may be straight and/or the second line segment may be straight. A straight line segment may be defined as a straight line in the chordal plane or equivalently that the line segment is straight in a top view of the suction side of the blade. Further, a straight line segment may be defined as the path defining the shortest distance between two points along the outer surface of the wind turbine blade. A straight first line segment may form a first angle with the pitch axis in the range from 0 to 10 degrees, such as from 0 to 5 degrees.

A straight second line segment may form a second angle with the pitch axis in the range from 2 degrees to 60 degrees or from 5 to 45 degrees. In one or more embodiments, the second angle may be from 5 to 10 degrees, e.g. about 8 degrees.

The first intermediate point may be located in a blade length interval of 0.05L to 0.30L from the root end. In one or more embodiments, the first intermediate point is located in a blade length interval of 0.08L to 0.20L, such as 0.10L to 0.17L, from the root end. The first intermediate point may be located between the root end and the shoulder.

The first intermediate point may be located in a relative chordal position of 2%-20% from the leading edge. In one or more embodiments, the first intermediate point is located in a relative chordal position of 3%-15%, or 5-15%, e.g. approx 10% from the leading edge.

The mounting line may comprise a second intermediate point The second intermediate point may be located in a blade length interval of 0.10L to 0.4L from the root end, In one or more embodiments, the second intermediate point is located in a blade length interval of 0.15L to 0.3L, from the root end. The second intermediate point may be located between the shoulder and the tip end.

The second intermediate point may be located in a relative chordal position of 5%-30% from the leading edge. In one or more embodiments, the first intermediate point is located in a relative chordal position of 15-25%, e.g. approx 20% from the leading edge.

A straight third line segment, e.g. between the second intermediate point and the distal end point may form a third angle with the pitch axis in the range from 2 degrees to 60 degrees or from 5 to 45 degrees. In one or more embodiments, the third angle may be from 5 to 15 degrees, e.g. about 12 degrees. Line segments of the mounting line form angles with the pitch axis. The angles may increase with the distance from the root end. For example a second line segment closer to the tip end than a first line segment may form a second angle with the pitch axis larger than the first angle between the first line segment and the pitch axis. Additionally or as an alternative, a third line segment closer to the tip end than a second line segment may form a third angle with the pitch axis larger than the second angle between the second line segment and the pitch axis.

In general, vortex generators along the mounting line may be aligned with the leading edges of the vortex generators substantially parallel to mounting line tangents at the respective vortex generator positions. However, one or more vortex generators may be rotated about the centre position in order to provide a desired attack angle for the vane(s) of the respective vortex generator. For example, the leading edge of a vortex generator on a second or third line segment may be parallel to the pitch axis or form an angle with the pitch axis less than 3 degrees.

For example, a second set of vortex generators positioned along a second line segment of the mounting line may be arranged such that the first vanes thereof form respective first attack angles (angle between pitch axis and vane line at base) in the range from 65 degrees to 80 degrees or from 70 degrees to 75 degrees. Additionally or as an alternative, a distal vortex generator located at the distal end point may comprise a first vane forming a first attack angle with the pitch axis in the range from 65 degrees to 80 degrees or from 70 degrees to 75 degrees.

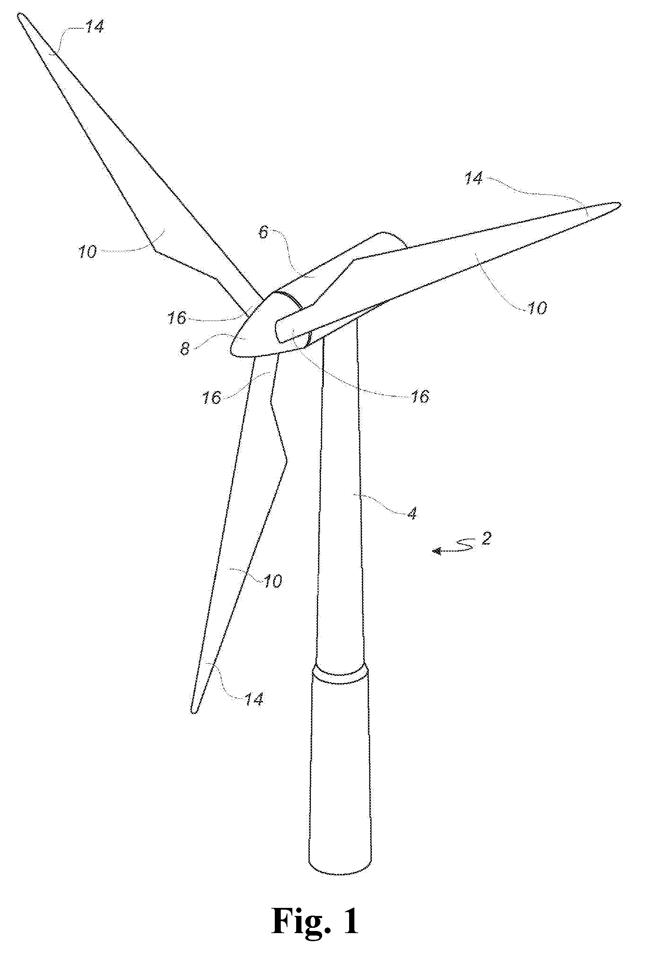

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three wind turbine blades 10 extending radially from the hub 8, each wind turbine blade having a blade root or root end 16 nearest the hub and a blade tip or tip end 14 furthest from the hub 8. The rotor has a radius denoted R.

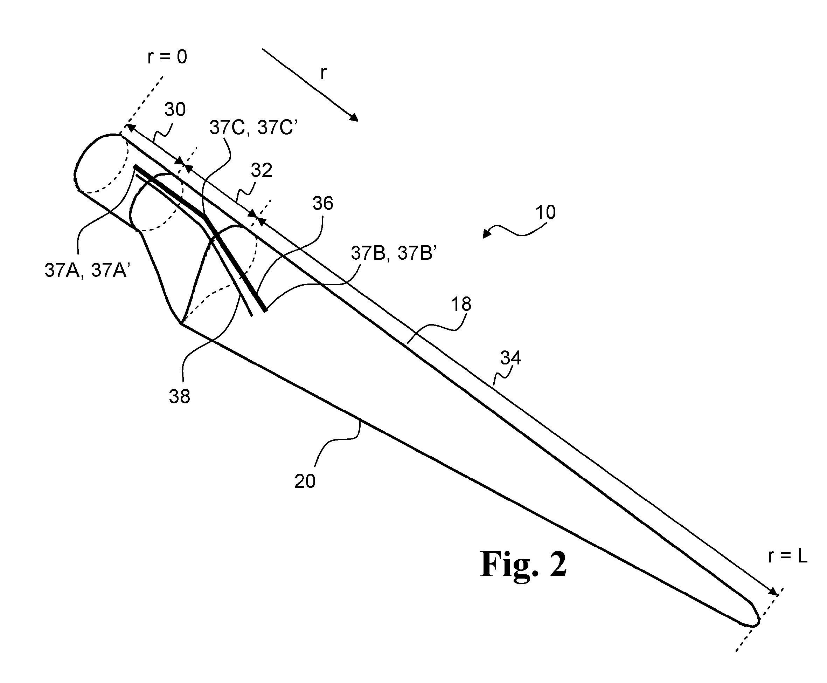

Fig. 2 shows a schematic view of a wind turbine blade 10 according to the present invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub. The shape of the blade in the root region and the transition region is not optimum with regard to aerodynamics, however necessary due to structural considerations. It should be noted that the chords of different sections of the blade normally do not lie in a common plane, since the blade may be twisted and/or curved (i.e. pre-bent), thus providing the chord or chordal plane with a correspondingly twisted and/or curved course, this being most often the case in order to compensate for the local velocity of the blade being dependent on the radius from the hub.

The suction side of the wind turbine blade is provided with a plurality of vortex generators positioned along a mounting line 36 having a proximal end point 37A with a proximal vortex generator 37A' nearest the root end and a distal end point 37B with a distal vortex generator 37B' nearest the tip end. The mounting line 36 is a concave line seen from the trailing edge 20 of the wind turbine blade. The vortex generators are mounted between an expected separation line 38 and the leading edge 18 of the wind turbine blade. A first intermediate point 37C with a first intermediate vortex generator 37C' divides the mounting line 36 into a straight first line segment extending from the proximal end point 37A to the first intermediate point 37C and a straight second line segment extending from the first intermediate point 37C to the distal end point 37B.

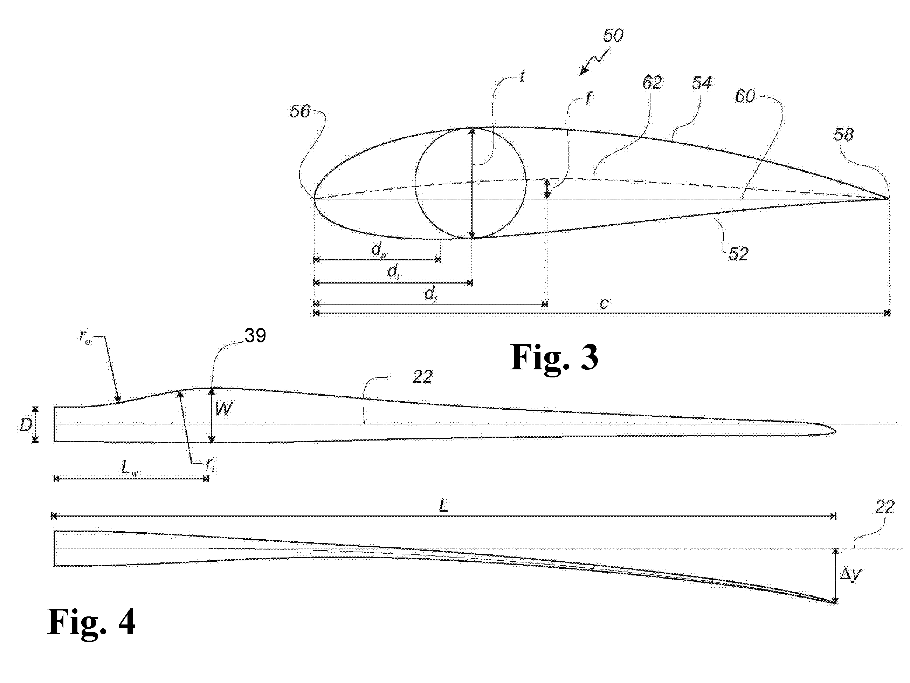

Figs. 3 and 4 depict parameters, which may be used to explain the geometry of the wind turbine blade according to the invention.

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber *f*. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber *f*, the position *d_{f}* of the maximum camber *f*, the maximum airfoil thickness *t*, which is the largest diameter of the inscribed circles along the median camber line 62, the position *dₜ* of the maximum thickness *t*, and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows other geometric parameters of the wind turbine blade. The wind turbine blade has a total blade length *L*. As shown in Fig. 3, the root end is located at position *r* = 0, and the tip end located at *r* = *L*. A shoulder 39 of the blade 10 is defined as the position, where the blade 10 has its largest chord length. The shoulder 39 is typically provided at the boundary between the transition region 32 and the airfoil region 34. The shoulder 39 of the blade is located at a position *r* = *L_{w}*, and has a shoulder width *W*, which equals the chord length at the shoulder 39. The diameter of the root is defined as *D*. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively.

Further, the blade may be provided with a prebend, which is defined as Δ*y*, which corresponds to the out of plane deflection from a pitch axis 22 parallel to the longitudinal direction of the blade.

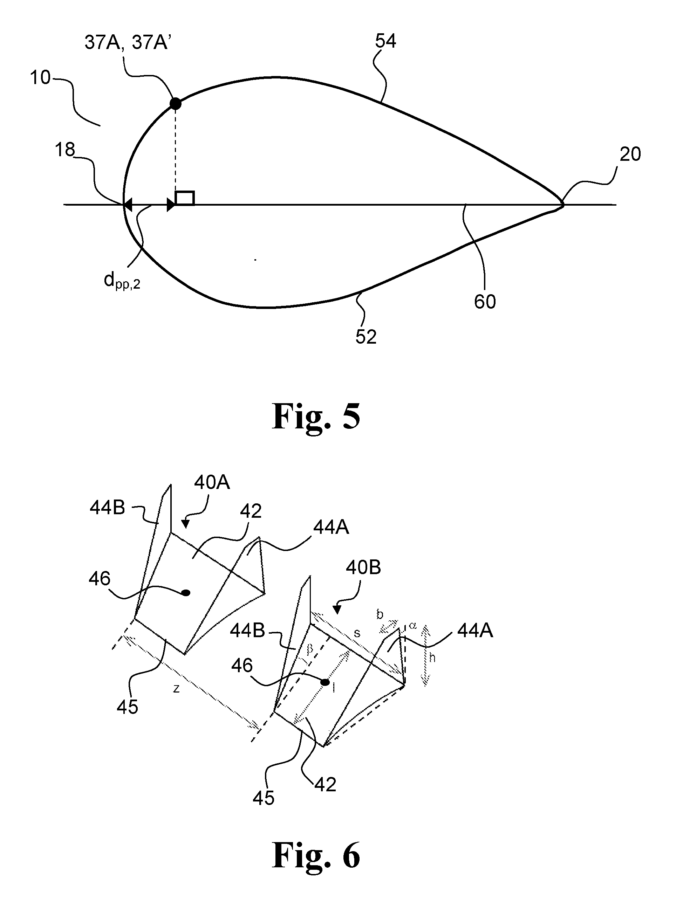

Fig. 5 shows a cross section of a wind turbine blade perpendicular to the longitudinal direction at the distance d_{pp,1} of the proximal end point 37A from the root end. The centre position of the proximal vortex generator 37A' defines the proximal end point 37A. The proximal end point 37A is located at a chord-wise distance d_{pp,2} from the leading edge. The distance d_{pp,2} may be in the range from 0.02c to 0.2c, e.g. about 0.10c as illustrated, where c is the length of the chord at distance d_{pp,1} from the root end.

Fig. 6 shows exemplary vortex generators 40A, 40B mounted on the suction side surface of a wind turbine blade. The vortex generators 40A, 40B each comprise a base 42 with a first vane 44A and second vane 44B extending from the base 42. The base 42 has a leading edge 45 and a centre position 46 which may coincide with or partly define the mounting line 36. The leading edge 45 may in general be parallel to the mounting line and/or the leading edge 45 may be substantially parallel to the pitch axis.

Parameter values of exemplary vortex generators VG1, VG2 and VG3 and their configuration on the suction side of the wind turbine blade are shown in Table 1.

**Table 1. Vortex generator parameters**

| **Parameter** | **Ref** | **Unit** | **VG1** | **VG2** | **VG3** |
|---|---|---|---|---|---|
| Height | h | [mm] | 10 (5-15) | 20 (15-25) | 30 (25-35) |
| Length (width) | l | [mm] | 20 (10-30) | 40 (30-50) | 60 (50-70) |
| Length (vane top) | b | [mm] | 2.4 (1-4) | 4.8 (3-6) | 7.5 (6-9) |
| Spacing | s | [mm] | 30 (20-40) | 60 (40-80) | 90 (70-110) |
| | z | [mm] | 50 (30-70) | 100 (75-125) | 150 (100-200) |
| Angle | a | [deg] | 6 (3-9) | | |
| | β | [deg] | 18 (10-25) | | |
| | a | [deg] | 0.9 (0.5-1.5) | | |

In Table 1, spacing parameter values z are indicated for neighboring vortex generators of the same type (VG1, VG2, VG3). When shifting from VG1 to VG2 in a panel or between neighbouring vortex generators, the distance z between VG1 and VG2 may be in the range from 50 mm to 100 m, e.g. 75 mm. When shifting from VG2 to VG3 in a panel or between neighbouring vortex generators, the distance z between VG2 and VG3 may be in the range from 100 mm to 150 m, e.g. 125 mm. Neighboring vortex generators may be rotated about their centre position in relation to each other in order to facilitate optimum attack angle and wind flow across the vortex generator. The base 42 may be planar, single-curved or double-curved in order to facilitate mounting on the suction side of the wind turbine blade.

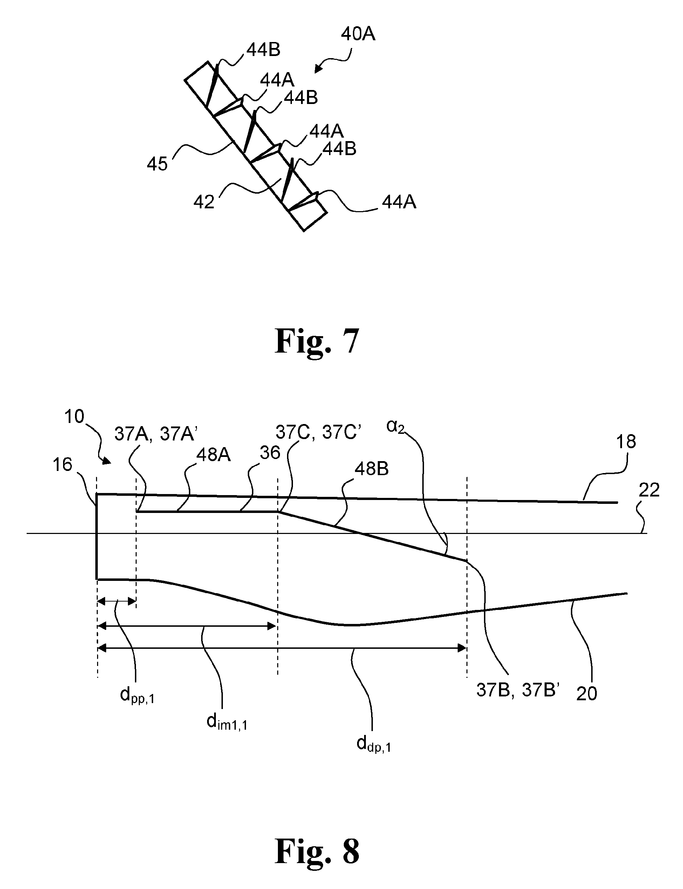

Fig. 7 is a perspective view of a vortex generator comprising a plurality of vane sets mounted on a base 42, each vane set comprising a first vane 44A and a second vane 44B. A compensation angle may be added or subtracted from the vane angle β of the different vanes in Table 1 in order to adapt the vortex panel for installation at different angles with respect to the pitch axis.

Fig. 8 illustrates a part of an exemplary wind turbine blade according to the invention. The wind turbine blade comprises a plurality of vortex generators mounted or arranged along a mounting line 36. The proximal end point 37A of the mounting line 36 is located close to the root end at a distance d_{pp,1} = 0.04L from the root end. The proximal end point 37A is located at a chord-wise distance d_{pp,2} = 0.11c from the leading edge. A tangent to the proximal end point 37A is substantially parallel to the pitch axis corresponding to an angle of 0 degrees with the pitch axis. The distal end point 37B of the mounting line 36 is located in the airfoil region at a distance d_{dp,1} = 0.35L from the root end and at a chord-wise distance d_{dp,2} = 0.5c from the leading edge. A tangent to the distal end point of the mounting line forms an angle with the pitch axis of about 8 degrees. The mounting line 36 comprises a first intermediate point 37C located at a distance d_{im1,1} = 0.13L from the root end and at a chord-wise distance d_{im1,2} = 0.10c from the leading edge. The first intermediate point 37C divides the mounting line into a straight first line segment 48A parallel to the pitch axis 22 and a straight second line segment 48B forming a second angle α₂ of about 8 degrees with the pitch axis 22. A first set of vortex generators comprising at least 10 vortex generators, such as about 35 vortex generators, is positioned along the first line segment. A second set of vortex generators comprising at least 10 vortex generators is positioned along the second line segment.

The chord-wise distance from the leading edge may increase for vortex generators on the mounting line towards the tip end. For example for a first intermediate vortex generator and a second intermediate vortex generator on the mounting line, d_{im1,2} < d_{im2,2} where d_{im1,1} < d_{im2,1}.

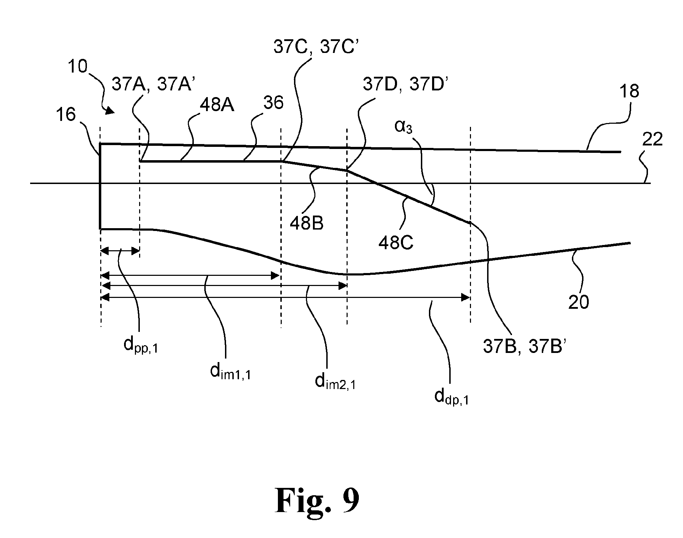

Fig. 9 illustrates a part of an exemplary wind turbine blade according to the invention where the mounting line 36 further comprises a second intermediate point 37D with a second intermediate vortex generator 37D' at the shoulder between the first intermediate point 37C and the distal end point 37B in Fig. 8 and a third line segment 48C with a third angle α₃ of about 12 degrees with the pitch axis 22. The second line segment 48B between the first intermediate point 37C and the second intermediate point 37D forms a second angle α₂ of about 4 degrees with the pitch axis 22. The distance d_{im2,1} is 0.21 L and d_{im2,2} is 0.2c.

It should be noted that in addition to the exemplary embodiments of the invention shown in the accompanying drawings, the invention may be embodied in different forms and should not be construed as limited to the embodiments set forth herein. Rather, these embodiments are provided so that this disclosure will be thorough and complete, and will fully convey the concept of the invention to those skilled in the art.

### LIST OF REFERENCES

- 2: wind turbine
- 4: tower
- 6: nacelle
- 8: hub
- 10: blade
- 14: blade tip/tip end
- 16: blade root/root end
- 18: leading edge
- 20: trailing edge
- 22: pitch axis
- 30: root region
- 32: transition region
- 34: airfoil region
- 36: mounting line
- 37A: proximal end point
- 37A': proximal vortex generator
- 37B: distal end point
- 37B': distal vortex generator
- 37C: first intermediate point
- 37C': first intermediate vortex generator
- 37D: second intermediate point
- 37D': second intermediate vortex generator
- 38: separation line
- 39: shoulder
- 40A, 40B: vortex generator
- 42: base
- 44A: first vane
- 44B: second vane
- 45: leading edge
- 46: centre position
- 48A: first line segment
- 48B: second line segment
- 48C: third line segment
- 50: airfoil profile
- 52: pressure side
- 54: suction side
- 56: leading edge
- 58: trailing edge
- 60: chord
- 62: camber line / median line
- C: chord length
- d_{pp,1}: distance of proximal end point from root end
- d_{pp,2}: chord-wise distance of proximal end point from leading edge
- d_{dp,1}: distance of distal end point from root end
- d_{dp,2}: chord-wise distance of distal end point from leading edge
- d_{im1,1}: distance of first intermediate point from root end
- d_{im1,2}: chord-wise distance of first intermediate point from leading edge
- d_{im2,1}: distance of second intermediate point from root end
- d_{im2,2}: chord-wise distance of second intermediate point from leading edge
- α₁: first angle between first line segment and pitch axis
- α₂: second angle between second line segment and pitch axis
- α₃: third angle between third line segment and pitch axis
- dₜ: position of maximum thickness
- d_{f}: position of maximum camber
- dₚ: position of maximum pressure side camber
- dₛ: shoulder distance
- f: camber
- L: blade length
- P: power output
- R: local radius, radial distance from blade root
- T: thickness
- V_{w}: wind speed
- θ: twist, pitch
- Δy: prebend

## Claims

1. A wind turbine blade (10) for a rotor of a wind turbine (2) having a substantially horizontal rotor axis, the rotor comprising a hub (8) from which the wind turbine blade extends substantially in a radial direction when mounted to the hub (8), the wind turbine blade extending in a longitudinal direction (r) along a pitch axis and having a tip end (16) and a root end (14) as well as a blade length, the wind turbine blade further comprising a profiled contour including a pressure side and a suction side, as well as a leading edge (18) and a trailing edge (20) with a chord having a chord length extending there between, the profiled contour, when being impacted by an incident airflow generating a lift, wherein the suction side of the wind turbine blade is provided with a plurality of vortex generators positioned along a mounting line (36) having a proximal end point (37A) nearest the root end and a distal end point (37B) nearest the tip end, wherein the mounting line is a concave line seen from the trailing edge of the wind turbine blade.

2. A wind turbine blade according to claim 1, wherein the mounting line extends along 10% to 50 % of the blade length.

3. A wind turbine blade according to any of the preceding claims, wherein the proximal end point is located in a blade length interval of 0 - 0.12L or 0 - 0.10L, or 0 - 0.08L, or 0 - 0.6L from the root end.

4. A wind turbine blade according to any of the preceding claims, wherein the proximal end point is located in a relative chordal position of 2%-20%, or 3%-15%, or 5-15%, e.g. approx 10% from the leading edge.

5. A wind turbine blade according to any of the preceding claims, wherein the distal end point is located in a blade length interval of 0.2L to 0.5L, or 0.25L to 0.45L, or 0.3L to 0.4L from the root end.

6. A wind turbine blade according to any of the preceding claims, wherein the distal end point is located in a relative chordal position of 20%-80%, or 25%-70%, or 30-60%, e.g. approx 50% from the leading edge.

7. A wind turbine blade according to any of the preceding claims, wherein a tangent to the proximal end point of the mounting line forms an angle with the pitch axis in the range from 0 to 10 degrees, or 0 to 5 degrees.

8. A wind turbine blade according to any of the preceding claims, wherein a tangent to the distal end point of the mounting line forms an angle with the pitch axis in the range from 5 degrees to 45 degrees or 5 degrees to 35 degrees, such as 8 degrees.

9. A wind turbine blade according to any of the preceding claims, wherein the mounting line comprises at least a first intermediate point dividing the mounting line into a straight first line segment and a second line segment.

10. A wind turbine blade according to claim 9, wherein the first intermediate point is located in a blade length interval of 0.05L to 0.30L, or 0.08L to 0.20L, or 0.10L to 0.17L from the root end.

11. A wind turbine blade according to any of claims 9-10, wherein the first intermediate point is located in a relative chordal position of 2%-20%, or 3%-15%, or 5-15%, e.g. approx 10% from the leading edge.

12. A wind turbine blade according to any of claims 9-11, wherein the first line segment forms a first angle with the pitch axis in the range from 0 to 10 degrees.

13. A wind turbine blade according to any of claims 9-12, wherein the second line segment is straight and forms a second angle with the pitch axis in the range from 2 degrees to 60 degrees or 5 to 45 degrees.

14. A wind turbine blade according to any of the preceding claims, wherein the profiled contour is divided into:
- a root region (30) having a substantially circular or elliptical profile closest to the hub,
- an airfoil region (34) having a lift-generating profile furthest away from the hub, and
- a transition region (32) between the root region (30) and the airfoil region (34), the transition region (32) having a profile gradually changing in the radial direction from the circular or elliptical profile of the root region to the lift-generating profile of the airfoil region
wherein the mounting line extends along substantially the entire transition region of the blade.

15. A wind turbine blade according to claim 14, the profiled contour having a shoulder (39) with a shoulder width and located at the boundary between the transition region (32) and the airfoil region (34), wherein the shoulder is located in an interval of 0.15L to 0.25L, or 0.18L to 0.25L, or 0.19L to 0.24L from the root end.

16. A wind turbine blade according to any of the preceding claims, wherein a distal vortex generator is located at the distal end point, the distal vortex generator comprising a base and a pair of vanes including a first vane and a second vane protruding from the base, wherein the first vane forms a first attack angle with the pitch axis in the range from 65 degrees to 80 degrees or from 70 degrees to 75 degrees.

17. Method for retrofitting a wind turbine blade extending in a longitudinal direction along a pitch axis and having a tip end and a root end as well as a blade length, the wind turbine blade further comprising a profiled contour including a pressure side and a suction side, as well as a leading edge and a trailing edge with a chord having a chord length extending there between, the profiled contour, when being impacted by an incident airflow generating a lift, the method comprising mounting a plurality of vortex generators along a mounting line having a proximal end point nearest the root end and a distal end point nearest the tip end, wherein the mounting line is a concave line seen from the trailing edge of the wind turbine blade.
